Europäisches Patentamt

European Patent Office

Office européen des brevets

(19)

(11) Veröffentlichungsnummer: **0 070 452**
**B1**

(12) EUROPÄISCHE PATENTSCHRIFT

(45) Veröffentlichungstag der Patentschrift:
**10.04.85**

(51) Int. Cl.⁴: **C 08 J 3/22**, C 08 K 3/22,
C 08 L 77/02

(21) Anmeldenummer: **82106047.2**

(22) Anmeldetag: **07.07.82**

(54) Verfahren zur Herstellung von Konzentraten von Titandioxid in Polycaprolactam.

(30) Priorität: **18.07.81 DE 3128476**

(43) Veröffentlichungstag der Anmeldung:
**26.01.83 Patentblatt 83/4**

(45) Bekanntmachung des Hinweises auf die Patenterteilung:
**10.04.85 Patentblatt 85/15**

(84) Benannte Vertragsstaaten:
**BE CH DE FR GB IT LI NL**

(56) Entgegenhaltungen:
**GB - B - 729 584**
**US - A - 2 846 332**

(73) Patentinhaber: **BASF Aktiengesellschaft,**
**Carl-Bosch-Strasse 38, D-6700 Ludwigshafen (DE)**

(72) Erfinder: **Strehler, Hugo, Dr., Carostrasse 12,**
**D-6710 Frankenthal (DE)**
Erfinder: **Hoerauf, Werner, Dr., Homburger Strasse 10,**
**D-6700 Ludwigshafen (DE)**
Erfinder: **Valentin, Guenter,**
**Pfarrer-Friedrich-Strasse 43, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist häufig erwünscht mit Titandioxid mattiertes Polycaprolactam herzustellen, um daraus Fäden mit einem besonderen Mattglanz zu erspinnen. Hierbei ist es erforderlich, der polymerisierenden Caprolactamschmelze fein verteiltes Titandioxid einzuverleiben. Wie aus «Klare synthetische Fasern aus Polyamiden», Akademie-Verlag, Berlin, 1963, Seite 170 bekannt ist, führt man das Titandioxid als Suspension in Wasser oder Caprolactam der polymerisierenden Schmelze zu. Diese Arbeitsweise hat den Nachteil, dass Titandioxid durch den mitverwendeten Kettenregler leicht ausflockt und zu Knötchen im ersponnenen Faden führt. Darüber hinaus sind die verwendeten Titandioxidsuspensionen nicht über einen längeren Zeitraum lagerfähig. Titandioxid setzt sich ab, wodurch Suspensionen unterschiedlicher Konzentration erhalten werden. Es wurde auch schon versucht diesen Nachteil durch Zugabe von Schutzkolloiden zu beheben. Hierdurch werden jedoch Fremdstoffe in die Polyamidschmelze eingebracht, was unerwünscht ist, insbesondere dann, wenn Polycaprolactam zur Faserherstellung verwendet wird.

Es war deshalb die technische Aufgabe gestellt, Konzentrate von Titandioxid zur Verfügung zu stellen, die lagerstabil sind, eine gleichbleibende Konzentration haben, sich leicht in der Caprolactambzw. Polycaprolactamschmelze verteilen lassen und die zudem durch Wegfall von Wasser die Kapazität der Polymerisationsanlage nicht beeinträchtigen.

Diese Aufgabe wird gelöst in einem Verfahren zur Herstellung von Konzentraten von Titandioxid in Polycaprolactam mit einem Gehalt von 20 bis 50 Gew.-% Titandioxid durch Polymerisation von Caprolactam in Gegenwart von Titandioxid, dadurch gekennzeichnet, dass man zu einer Lösung von Caprolactam in Wasser bei 110 bis 150°C eine 5 bis 15 gew.%ige wässrige Suspension von Titandioxid, die durch Verkneten von pulverförmigem Titandioxid mit trockenem Caprolactam, anschliessendes Verkneten unter Zusatz von Wasser und gegebenenfalls Dialkaliphosphat, Aufschlämmen der erhaltenen Paste mit Wasser, Sedimentieren der groben Titandioxidanteile und Abdekantieren von dem sedimentierten Anteil erhalten worden ist, in dem Mass zudosiert, wie Wasser abdestilliert und nach Abdestillieren der gesamten Wassermenge das so erhaltene Gemisch bei 240 bis 280°C polymerisiert.

Das neue Verfahren hat den Vorteil, dass man lagerstabile Titandioxidkonzentrate erhält, die eine immer gleichbleibende Konzentration haben. Ferner hat das neue Verfahren den Vorteil, dass Titandioxid nicht ausflockt und leicht in polymerisierendem Caprolactam zu verteilen ist. Ferner hat das neue Verfahren den Vorteil, dass die erfindungsgemäss erhältlichen Konzentrate die Polymerisation von Caprolactam nicht zusätzlich mit Wasser belasten und so die Kapazität nicht einschränken.

Erfindungsgemäss geht man von einer Lösung von Caprolactam in Wasser aus. Vorteilhaft enthält das Gemisch je Gewichtsteil Caprolactam 0,12 bis 0,16 Gew.-Teile Wasser. Die Lösung hält man auf einer Temperatur von 110 bis 150°C, insbesondere 120 bis 140°C.

Die verwendete wässrige Suspension von Titandioxid hat einen Gehalt von 5 bis 15, insbesondere von 8 bis 12 Gew.-% Titandioxid. Die Korngrösse des Titandioxids beträgt vorteilhaft 0,1 bis 0,5 $\mu$m. Neben Titandioxid kann die wässrige Suspension vorteilhaft bis zu 30 Gew.-% Caprolactam, sowie bis zu 0,2 Gew.-% Dialkaliphosphat, insbesondere Natriumphosphat, jeweils bezogen auf Titandioxid enthalten. Eine geeignete wässrige Suspension von Titandioxid erhält man beispielsweise durch Kneten von pulverförmigem Titandioxid (Rutil oder Anatas, vorzugsweise Anatas) mit Caprolactam im Gewichtsverhältnis 1 : 0,5 bis 0,35. Dem so erhaltenen Gemisch gibt man 0,1 bis 0,3 Teile vollentsalztes Wasser sowie bis zu 0,2 Gew.-Teile Dinatriumphosphat jeweils bezogen auf TiO$_2$ zu und verknetet die Masse weiter. Man erhält eine Paste mit 60 bis 80 Gew.-% Titandioxid, die mit Wasser auf einen Gehalt von 5 bis 15 Gew.-% Titandioxid eingestellt wird. Diese Suspension wird z.B. durch Umpumpen homogenisiert und anschliessend lässt man die groben Teilchenn sedimentieren. Anschliessend wird die wässrige Titandioxidsuspension von den groben sedimentierten Agglomeraten abdekantiert.

Die wässrige Suspension von Titandioxid wird in die vorgenannte Lösung von Caprolactam mit Wasser zudosiert. Die Menge richtet sich nach dem gewünschten Gehalt des herzustellenden Konzentrats, sowie nach dem Gehalt der verwendeten wässrigen Suspension. Während des Zudosierens hält man die Lösung auf eine Temperatur von 110 bis 150, insbesondere 120 bis 140°C. Die wässrige Suspension von Titandioxid wird in dem Mass zudosiert, wie Wasser abdestilliert wird. Das so erhaltene Gemisch besteht im wesentlichen aus Caprolactam und Titandioxid, gegebenenfalls Dialkaliphosphat, sowie geringen Mengen Wasser, z.B. bis zu 10 Gew.-%, bezogen auf TiO$_2$. Dieses Gemisch wird vorteilhaft durch 17 $\mu$m Siebe filtriert.

Das so erhaltene Gemisch wird anschliessend bei einer Temperatur von 240 bis 280°C polymerisiert bis zu einer Viskosität von 1,8 bis 3,0 rel. Das erhaltene Polymerisat wird in Stränge gegossen und granuliert.

Die Titandioxid-Konzentrate, die nach dem Verfahren der Erfindung erhalten werden, eignen sich zur Mattierung von Polycaprolactam während dessen Herstellung.

Das Verfahren nach der Erfindung sei am folgenden Beispiel veranschaulicht.

*Beispiel*

a) Herstellung einer Titandioxid-Suspension

In einem Kneter werden 275 kg Titandioxid (Anatas) der mittleren Korngrösse 2 $\mu$m und 68 kg Caprolactam bei einer Temperatur von ca. 20°C 2 Stunden geknetet. Anschliessend werden 60 kg vollentsalztes Wasser und 0,1 Gew.-% Dinatriumphosphat 12 H$_2$O (bezogen auf Titandioxid) zugegeben und weitere 2 Stunden geknetet. Die erhaltene 68 gew.%ige Paste wird mit 2000 Liter vollentsalztem Wasser aus dem Kneter über einen Turbomischer in einen Behälter gespült und zur Homogenisierung eine Stunde im Kreis gepumpt. Anschliessend lässt man 48 Stunden stehen, zum Zwecke der Sedimentation von Agglomeraten und grösseren Titandioxidteilchen. Anschliessend wird vom abgesetzten Anteil Titandioxid abdekantiert. Die erhaltene wässrige Suspension enthält etwa 11 Gew.-% Titandioxid einer Korngrösse von 0,2 bis 0,9 $\mu$m.

b) Herstellung von Titandioxid-Konzentrat

In einem Druckgefäss werden 2200 Liter Caprolactam und 350 Liter vollentsalztes Wasser vorgelegt und unter Rühren auf 130°C erhitzt. Es stellt sich ein Druck von 1,5 bar ein. Im Verlauf von 11 Stunden werden 9000 kg einer 11 gew.%igen Titandioxid-Suspension, die nach a) hergestellt wurde zudosiert. Während des Zudosierens wird fortlaufend Wasser abdestilliert. Nach Beendigung des Zudosierens der Titandioxid-Suspension steigt die Temperatur auf 150°C an und zeigt das Ende der Wasserdestillation an. Anschliessend wird das erhaltene Gemisch, das noch ca. 6 Gew.-% Wasser (bezogen auf Titandioxid) enthält über zwei doppelte Siebe mit einer Maschenweite von 17 $\mu$m filtriert. Das filtrierte Gemisch wird bei einer Temperatur von 258°C und bei einem Druck von 7 bar 7,5 Stunden polymerisiert. Anschliessend wird die Schmelze in Form von Strängen ausgetragen und granuliert. Das Granulat enthält 31 Gew.-% Titandioxid.

**Patentanspruch**

Verfahren zur Herstellung von Konzentraten von Titandioxid in Polycaprolactam mit einem Gehalt von 20 bis 50 Gew.-% Titandioxid durch Polymerisation von Caprolactam in Gegenwart von Titandioxid, dadurch gekennzeichnet, dass man zu einer Lösung von Caprolactam in Wasser bei 110 bis 150°C eine 5 bis bis 15 gew.%ige wässrige Suspension von Titandioxid, die durch Verkneten von pulverförmigem Titandioxid mit trockenem Caprolactam, anschliessendes Verkneten unter Zusatz von Wasser und gegebenenfalls Dialkaliphosphat, Aufschlämmen der erhaltenen Paste mit Wasser, Sedimentieren der groben Titandioxidanteile und Abdekantieren von dem sedimentierten Anteil erhalten worden ist, in dem Mass zudosiert, wie Wasser abdestilliert und nach Abdestillieren der gesamten Wassermenge das so erhaltene Gemisch bei 240 bis 280°C polymerisiert.

**Claim**

A process for the production of a concentrate of from 20 to 50% by weight of titanium dioxide in polycaprolactam by polymerization of caprolactam in the presence of titanium dioxide, wherein a 5 to 15% strength by weight aqueous suspension of titanium dioxide, which has been obtained by kneading titanium dioxide powder with dry caprolactam, then kneading these materials with the addition of water, with or without the addition of a di-alkali metal phosphate, suspending the resulting paste in water, allowing the coarse titanium dioxide particles to settle out, and decanting the suspension from the sediment, is metered into a solution of caprolactam in water at from 110 to 150°C at the same rate at which water is distilled off, and, after all the water has been distilled off, the resulting mixture is polymerized at from 240 to 280°C.

**Revendication**

Procédé de préparation de concentrés de dioxyde de titane dans de la polycaprolactame, d'une teneur en dioxyde de titane de 20 à 50% en poids, par polymérisation de caprolactame en présence de dioxyde de titane, caractérisé en ce qu'une suspension aqueuse de dioxyde de titane, d'une teneur de 5 à 15% en poids, préparée par malaxage de dioxyde de titane pulvérulent dans de la caprolactame anhydre, malaxage poursuivi avec addition d'eau et éventuellement d'un dialcali-phosphate, mise en suspension de la pâte formée dans de l'eau et séparation des particules grossières de dioxyde de titane par sédimentation et décantation, est ajoutée de façon dosée, entre 110 et 150°C, à une solution aqueuse de caprolactame, dans la mesure où l'eau est éliminée par distillation et, lorsque la totalité de l'eau a été éliminée par distillation, le mélange obtenu est soumis à une polymérisation entre 240 et 280°C.